# EUROPÄISCHE PATENTSCHRIFT

(11) **EP 1 172 545 B1**
(45) Veröffentlichungstag und Bekanntmachung des Hinweises auf die Patenterteilung: **29.05.2013**
(21) Anmeldenummer: 00115375.8
(22) Anmeldetag: 15.07.2000
(51) Int. Cl.: F02K 9/95, F02K 9/94

(54) **Zündsystem für Brennkammern in Raketentriebwerken**
Ignition system for combustion chambers in rocket engines
Système d'allumage pour des chambres de combustion de moteurs-fusées

(43) Veröffentlichungstag der Anmeldung: 16.01.2002
(73) Patentinhaber: Astrium GmbH, 82024 Taufkirchen (DE); Fokker Aerostructures B.V., 3351 LB Papendrecht (NL)
(72) Erfinder: Mattstedt, Thomas, 80802 München (DE); De Wilde, Maurits, 6703 EN Wageningen (NL); Hensel, Christian, 83627 Osterwarngau (DE); Vermeulen, Edwin, 1019 WC Amsterdam (NL)
(74) Vertreter: Ulrich, Thomas

(56) Entgegenhaltungen:
- FR-A- 1 114 309
- FR-A- 2 636 095
- FR-A- 2 671 138
- GB-A- 1 439 368
- US-A- 3 098 353
- US-A- 3 943 706
- US-A- 5 116 000
- US-A- 5 531 067

## Beschreibung

Die vorliegende Erfindung betrifft ein Zündsystem für Brennkammem von Raketentriebwerken gemäß dem Oberbegriff des Patentanspruchs 1. Ein gattungsgemäßes Zündsystem ist aus der US-A-3,098,353 bekannt Die beiden dort vorgesehenen Hilfstanks für den Treibstoff des Zündsystems sind über Leitungen mit der Brennkammer des Raketentriebwerks verbunden. Für den Fall, dass keine hypergolischen Treibstoffe verwendet werden, kann ein konventioneller Zünder in der Brennkammer vorgesehen sein. Zwischen den Hilfstanks und der Brennkammer ist in jeder Zuleitung ein Abspenventil vorgesehen. Die Hitfstanks sind fest in das Gesamtsystem integriert und nicht als einfach austauschbare Tanks ausgebildet; sie weisen insbesondere keine dem jeweiligen Tank räumlich zugeordneten Absperrventile auf.

Die US-A-3,943,706 offenbart ein Zündsystem für Brennkammem von Raketentriebwerken, bei welchem ein Hilfstank für einen Oxidator vorgesehen ist Dieser Hitfstank ist über eine Leitung mit einem Speicher für ein Zündmittel verbunden, so dass der Oxidator durch den Speicher für das Zündmittel hindurch strömen kann und von dort das brennbare Gemisch in eine Vorbrennkammer geleitet wird. In der Leitung vom Tank für den Oxidator zum Speicher für das Zündmittel sind ein dem Tank für den Oxidator benachbartes Rückschlagventil sowie ein dem Speicher für das Zündmittel benachbartes Absperrventil vorgesehen. Eine Auswechselbarkeit des Tanks für den Oxidator ist in dieser Druckschrift nicht offenbart. Auch ist das Rückschlagventil kein Abspenventil mit dem der Tank verschlossen werden könnte, um ein Austreten des Oxidators bei abgenommenem Tank zu verhindern.

Die US-A-3,097,766 offenbart einen abnehmbaren Treibstofftank für ein Raketentriebwerk, der eine erste Kammer für einen Oxidator und eine zweite Kammer für einen Brennstoff aufweist, wobei jede Kammer über einen Flansch mit einer zum Raketentriebwerk führenden Leitung verbunden ist. In jeder dieser Leitungen ist ein Absperrventil vorgesehen. Im Bereich des jeweiligen Flansches ist die jeweilige Treibstoffkammer des Tanks mit einem Sollbruch-Diaphragma versiegelt, welches aufreißt, wenn die beiden Kammern des Tanks unter Überdruck gesetzt werden. Nach dem Aufreißen der Diaphragmen sind die jeweiligen Kammern des Tanks nicht mehr absperrbar. Wird der Tank nach Gebrauch oder zum Nachfüllen entnommen, so können Treibstoffreste austreten.

Zündsysteme sind beispielsweise auch aus DE 23 00 983 bekannt und können grundsätzlich bei allen Arten von Raketentriebwerken, insbesondere jedoch bei Raketentriebwerken mit Flüssigtreibstoffen Anwendung finden.

Auch EP 0 953 759 beschreibt ein Zündsystem für Raketentriebwerke, das in seinen Betriebsbedingungen stark an die Betriebsbedingungen des Raketentriebwerkes gebunden ist, da der für das Zündsystem nötige Oxidator vom Raketentriebwerk geliefert wird. Hierfür ist eine sehr komplexe Abstimmung der Betriebsbedingungen aufeinander erforderlich.

In DE 23 00 983 wird unter Bezugnahme auf Fig. 2 ein Zündsystem beschrieben, das für je eine Treibstoffkomponenten einen Treibstoffbehälter aufweist, wobei durch Zuleitungen eine erste Treibstoffkomponente in den Treibstoffbehälter der zweiten Treibstoffkomponente eingeleitet und dort mit dieser vermischt wird. Anschließend werden die vermischten Treibstoffkomponenten, gesteuert durch Ventile, in einer gemeinsamen Zuleitung einem Zünder zugeleitet.

Nachteilig an diesem Stand der Technik ist, dass durch eine frühe Vermischung der Treibstoffkomponenten ein gefährliches Gemisch entsteht, das auf einem unnötig langen Weg bis zum Zünder transportiert werden muss und dass ein relativ größer Aufwand für die Betankung des Zündsystems mit den nötigen Treibstoffkomponenten betrieben werden muss.

Die US 2,791,087 A offenbart ein Flüssigtreibstoff-Versorgungssystem für Raketenmotoren, bei welchem eine Mehrzahl von Tanks vorgesehen ist, die der Treibstoffversorgung für das Raketentriebwerk dienen. Separate Treibstoffbehälter für ein Zündsystem der Raketenmotoren sind nicht vorgesehen.

Die US 3,302,406 A zeigt ein Schubsteuerungssystem für Raketenmotoren. Bei diesem bekannten Raketenmotor führen zwei Treibstoffleitungen von jeweils einer Vergaservorrichtung zur Brennkammer. Jede dieser Vergaservorrichtungen wird über eine erste Leitung mit Treibstoff aus einem Treibstoffbehälter und über eine zweite Leitung mit einem Oxidationsmittel aus einem Oxidationsmitteltank versorgt. Zusätzlich zu den jedem der Tanks nachgeordneten Regelventilen sind manuell absperrbare Ventile in über Kreuz laufenden Leitungen vorgesehen, die Treibstoff beziehungsweise Oxidationsmittel zu einem der beiden Vergaser leiten. Ein Zündsystem für die Brennkammer des Raketentriebwerks, bei welchem dem Zündsystem ein neben den Treibstoff- beziehungsweise Oxidationsmitteltanks für das Triebwerk ein separater Zündsystem-Tank für die jeweilige Treibstoffkomponente zugeordnet ist, ist dort nicht vorgesehen.

Die US 3,397,030 A zeigt ein Gaserzeugungssystem für einen hypergolischen Kraftstoff und ein Oxidationsmittel. Diese Treibstoffkomponenten sind in einem jeweiligen Treibstofftank gespeichert. In den Zuleitungen vom jeweiligen Tank zum Gaserzeugungssystem sind manuell betätigbare Dosierventile vorgesehen. Zudem sind Absperrventile vorgesehen, die in den Zuleitungen liegen.

Aufgabe der vorliegenden Erfindung ist es, ein gattungsgemäßes Zündsystem für Brennkammern anzugeben, das bei niedrigem Aufwand für die Betankung des Zündsystems und geringer technischer Komplexität eine hohe Betriebssicherheit und eine verbesserte Nachfüllbarkeit der Treibstofftanks gewährleistet.

Diese Aufgabe wird durch die im kennzeichnenden Teil des neuen Patentanspruchs 1 angegebenen Merkmale gelöst.

Das erfindungsgemäße Zündsystem für Brennkammern von Raketentriebwerken ist versehen mit einem ersten Treibstoffbehälter für eine erste Treibstoffkomponente und einem zweiten Treibstoffbehälter für eine zweite Treibstoffkomponente, wobei die Treibstoffbehälter des Zündsystems von den Treibstoffbehältern des Raketentriebwerkes getrennt vorgesehen sind. Weiterhin umfasst das erfindungsgemäße Zündsystem einen Zünder und jeweils zwischen dem Zünder und einem der Treibstoffbehälter angeordnete Zuleitungen für die jeweilige Treibstoffkomponente. Hiermit wird sichergestellt, dass eine Vermischung der Treibstoffkomponenten zum spätestmöglichen Zeitpunkt erfolgt, nämlich erst innerhalb des Zünders. Dadurch kann eine höhere Betriebssicherheit des Systems garantiert werden. Die Treibstoffbehälter sind jeweils mit einem manuellen Absperrventil versehen. Somit können die Bedingungen für die Treibstoffkomponenten des Zündsystems getrennt von denjenigen des Raketentriebwerkes eingestellt und optimiert werden. Eine Einstellung der Betriebsbedingungen des Zündsystems wird dadurch ebenfalls erleichtert, da sie völlig unabhängig von den Betriebsbedingungen des Raketentriebwerkes erfolgen kann. Das erfindungsgemäße Zündsystem zeichnet sich zudem dadurch aus, dass die Treibstoffbehälter jeweils einen Flansch zur Ankoppelung des jeweiligen Treibstoffbehälters an die jeweilige Zuleitung aufweisen, wodurch die Treibstoffbehälter austauschbar ausgebildet sind. Die Austauschbarkeit der Treibstoffbehälter ermöglicht ein einfaches Betanken der Treibstoffbehälter außerhalb des Zündsystems, wodurch eine schnelle Betankung möglich ist und wobei aufgrund der am Treibstoffbehälter vorgesehenen Absperrventile ein aufwendiges Versiegeln der Auslassöffnungen des jeweiligen Treibstoffbehälters nicht erforderlich ist. Auch eine gefahrlose Demontage des Tanks zum Nachfüllen oder für eine spätere Wiederverwendung ist möglich, da ein Austreten von Treibstoffresten aus den Tanks durch das am Tank vorgesehene

Ventil verhindert wird. So wird einerseits ein einfaches Nachfüllen der Treibstoffbehälter außerhalb des Zündsystems ermöglicht, wodurch sich auch der bauliche Aufwand des Zündsystems verringert, da Zuführungen für das Nachfüllen entbehrlich werden. Andererseits kann durch geeignete Wahl der Treibstoffbehälter eine flexible Anpassung des Zündsystems an die Vorgaben der geplanten Betriebszustände erfolgen, z.B. durch Wahl anderer Treibstoffe oder durch Vorsehen größerer oder kleinerer Treibstoffbehätter. Insbesondere kann auch dadurch eine geeignete Anpassung des Zündsystems für unterschiedliche Arten und Anzahl von Mehrfachzündungen erfolgen.

Das Zündsystem kann dabei insbesondere so ausgelegt werden, dass mehrere, zeitlich nacheinander folgende Zündungen möglich sind. Dies kann beispielsweise durch eine entsprechende Auslegung der Ansteuerung des Zündsystems, speziell der dort vorgesehenen Schalt- und Regeleinrichtungen wie Ventile oder ähnliches erfolgen. Damit kann also die Brennkammer nach einer ersten Zündung und somit einem ersten Betrieb wieder abgeschaltet werden und durch eine erneute Zündung mit Hilfe des Zündsystems wieder gestartet werden. Gerade für eine solche Anwendung ist das erfindungsgemäße Zündsystem besonders geeignet, da je nach Anwendungsfall eine unterschiedliche Zahl und Art von Zündungen notwendig werden kann. Da das Zündsystem unabhängig von den Betriebsbedingungen des Raketentriebwerks eingestellt werden kann, ist somit eine Anpassung des Zündsystems an die individuellen Notwendigkeiten, gerade für Mehrfachzündungen, möglich.

In einer Weiterbildung der vorliegenden Erfindung ist vorgesehen, dass zur Druckregulierung jeweils mindestens eine Blende in den Zuleitungen vorgesehen ist. Eine Druckregulierung erfolgt in diesem Fall also nicht durch eine an sich denkbare Druckregeleinrichtung wie ein Regelventil mit zugehöriger Regelelektronik, sondern es werden viel einfachere passive Elemente verwendet, die damit auch weniger störanfällig sind und somit neben einer baulichen Vereinfachung ebenfalls zur erhöhten Betriebssicherheit beitragen. Die Blenden können entweder fest installiert sein, um stets eine bestimmte Druckregulierung zu erzeugen, sie können aber auch austauschbar ausgebildet sein, damit eine Anpassung der Druckregulierung an die jeweils aktuellen Gegebenheiten der geplanten Betriebszustände des Zündsystems erfolgen kann. Das Durchflussverhalten von Blenden ist grundsätzlich aus der Hydrodynamik bekannt, wie beispielsweise in H. Zoebl, J. Kruschik: "Strömung durch Rohre und Ventile", Springer Verlag Wien, New York, 1982, S. 72 beschrieben.

Um den Strom der Treibstoffkomponenten in den Zuleitungen freizugeben und ggf. wieder zu unterbinden, wird bevorzugt vorgesehen, dass in jeder Zuleitung mindestens ein Absperrventil vorgesehen ist. Diese Ventile können sehr einfach ausgelegt werden, da sie nur die Zustände Offen und Geschlossen einnehmen müssen, eine aufwendige Ansteuerung und Regelung z.B. zur Druckregulierung ist entbehrlich.

Insbesondere kann das Zündsystem so ausgestaltet sein, dass jede Zuleitung mit einem Spülungs- und Entlüftungssytem verbunden ist. Für den Fall der Entlüftung kann eine nach erfolgter Zündung noch verbleibende Menge der Treibstoffkomponenten aus dem Zündsystem entfernt werden und es kann insbesondere im Falle eines Abbruchs des Startvorgangs des Trägersystems, mit dem das Zündsystem zusammenwirkt, auf einfache Weise der Treibstoff aus dem Zündsystem entfernt werden. Die Möglichkeit der Spülung kann dazu benutzt werden, das Zündsystem mit einem Reinigungsgas oder grundsätzlich auch mit einer geeigneten Flüssigkeit zu spülen, um jeden Rest der Treibstoffkomponenten aus dem Zündsystem zu entfernen und z.B. eine Eisbildung in dem Zündsystem zu vermeiden. Es kann grundsätzlich für jede der Zuleitungen ein eigenes Spülungs- und Entlüftungssystem vorgesehen sein, aus Vereinfachungsgründen bietet es sich jedoch an, ein gemeinsames Spülungs- und Entlüftungssystem vorzusehen.

Weiterhin können die Zuleitungen mindestens ein Rückschlagventil aufweisen, um zu verhindern, dass die Treibstoffkomponenten in Richtung der Treibstoffbehälter in den Zuleitungen zurückfließen, insbesondere, nachdem diese bereits im Zünder vermischt wurden. Ein solches Zurückfließen könnte sonst z.B. durch Druckwellen in der Brennkammer ausgelöst werden. Damit kann das Eindringen unerwünschter Substanzen wie insbesondere Feuchtigkeit in die Zuleitungen und Treibstoffbehälter verhindert werden.

Zur Kontrolle der Funktion der Absperrventile und zur Überwachung des Betriebsverhaltens des Zündsystems kann insbesondere vorgesehen werden, dass die Zuleitungen mit Einrichtungen zur Bestimmung von Druck und/oder Temperatur in den Zuleitungen verbunden sind.

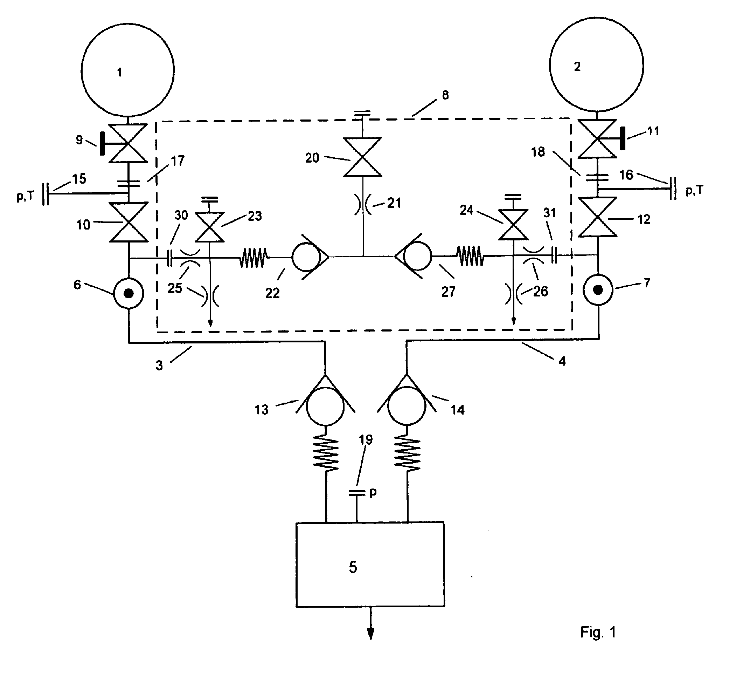

Ein spezielles Ausführungsbeispiel der vorliegenden Erfindung wird nachfolgend anhand der Figur 1 beschrieben.

Es zeigen:
- Fig. 1:: Schematische Darstellung eines Hochdruck-Blowdown-Zündsystems
- Fig. 2:: Zündsystem nach Fig. 1 mit alternativer Gestaltung des Spülungs- und Entlüftungssystems

Das in Fig. 1 dargestellte Zündsystem ist beispielhaft als Hochdruck-Blowdown-Zündsystem ausgebildet, d.h. die Förderung der Betriebsmedien bzw. Treibstoffe des Zündsystems erfolgt durch ein Druckgefälle zwischen den Speichertanks 1, 2 und den Austrittsöffnungen des Zünders 5. Dieser kann beispielsweise als elektrischer Zünder ausgebildet sein. Das Zündsystem kann beispielsweise zur Zündung von Raketenbrennkammern verwendet werden, kann jedoch auch in anderen Brennkammern Anwendung finden.

Es sind bei diesem Zündsystem zwei Speichertanks 1, 2 als Treibstoffbehälter vorgesehen, davon ein Tank 1 als Behälter für einen zu verbrennenden Treibstoff als erste Treibstoffkomponente, z.B. H2 und ein zweiter Tank 2 als Behälter für einen Oxidator, z.B. O2, als zweite Treibstoffkomponente, der den für die Verbrennung nötigen Sauerstoff liefert. Jeder der Tanks 1, 2 ist mit einem Absperrventil 9, 11 versehen und weist einen Flansch 17, 18 auf, mit dem eine Ankopplung des Tanks 1, 2 an das Zündsystem erfolgen kann. Jeder Tank 1, 2 ist somit austauschbar aus dem Zündsystem entfernbar und kann daher unter optimierten Bedingungen extern befüllt werden und dann bis kurz vor der eigentlichen Zündung bzw. bis kurz vor dem Ende der Vorbereitungen für den Start des Trägersystems, mit dem das Zündsystem zusammenwirkt, separat vom Zündsystem aufbewahrt werden. Auch ist dadurch das Zündsystem flexibler, da durch eine einfache Auswechslung der Tanks 1, 2 das Zündsystem schnell an die individuellen Gegebenheiten eines speziellen Einsatzes des Zündsystems angepasst werden kann.

Die Tanks 1, 2 sind über Zuleitungen 3, 4 mit dem Zünder 5 verbunden. In diese Zuleitungen sind Absperrventile 10, 12 eingebracht, hier insbesondere elektrische Absperrventile, die die Zustände Geöffnet und Geschlossen einnehmen können. Eine spezielle Drucksteuerung ist in diesem Beispiel für die Ventile nicht notwendig, da die Druckregulierung in den Zuleitungen 3, 4 durch passive Elemente, nämlich durch Blenden 6, 7 erfolgt. Die Einstellung des Druckes auf der Zünderseite erfolgt somit auf einfache Weise durch die Formgebund ung Dimensionierung der Durchtrittsöffnung der Blenden 6, 7.

Um ein Eindringen unerwünschter Substanzen, insbesondere von Feuchtigkeit, in die Zuleitungen 3, 4 und die Tanks 1, 2 zu verhindern, sind die Zuleitungen 3, 4 mit Rückschlagventilen 13, 14 versehen. Zur Überwachung des Betriebes des Zündsystems und der Funktion der Ventile sind Messeinrichtungen 15, 16 vorgesehen, die mit den Zuleitungen 3, 4 verbunden sind und dort Temperatur und Druck in den Zuleitungen 3, 4 bestimmen. Es können noch weitere Messeinrichtungen 19 dieser Art vorgesehen werden, z.B. um den Druck in dem Zünder 5 zu bestimmen.

Es ist schließlich ein Spülungs- und Entlüftungssystem 8 vorgesehen, das mit den Zuleitungen 3, 4 verbunden ist und dazu dient,
- das Zündsystem von verbleibenden Resten der Treibstoffkomponenten zu befreien
- das Zündsystem mit einem Reinigungsgas wie Helium durchzuspülen, um ebenfalls noch verbleibende Reste der Treibstoffkomponenten oder z.B. Feuchtigkeit zu entfernen und damit Eisbildung in dem Zündsystem zu verhindern
- eine Ableitung der Treibstoffkomponenten für den Fall eines Abbruchs der Zündung zu garantieren

Hierzu weist das Spülungs- und Entlüftungssystem 8 nach Fig. 1 beispielsweise auf: ein Ventil 20, z.B. elektromagnetisch gesteuert, um den Zufluss und Abfluss des Reinigungsgases (He) zu ermöglichen, eine Blende 21, um den Druck für den Zufluss des Reinigungsgases einzustellen, Rückschlagventile 22, 27, um ein Eindringen der Treibstoffkomponenten in das Spülungs- und Entlüftungssystem 8 zu verhindern, Absperrventile 23, 24, beispielsweise elektromagnetisch oder pyrotechnisch betrieben, um eine Ableitung der Treibstoffkomponenten aus den Zuleitungen 3, 4 zu ermöglichen, weitere Blenden 25, 26, um den Druck in den Ableitungen für die Treibstoffkomponenten und damit den Abfluss dieser Komponenten definiert einzustellen. Das Spülungs- und Entlüftungssytem ist als bauliche Einheit ausgebildet, die über Flansche 30, 31 mit den Zuleitungen 3, 4 verbunden werden kann.

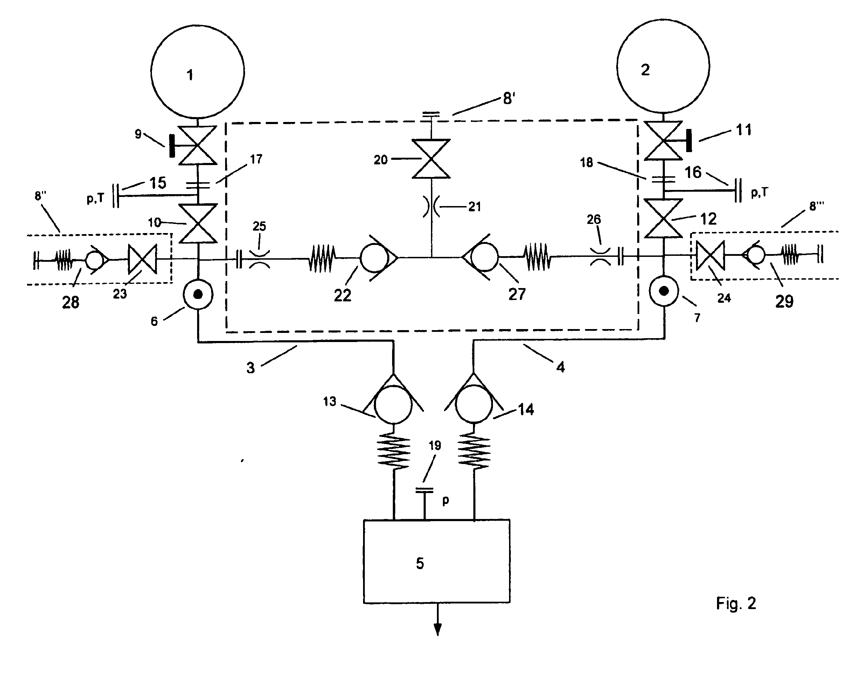

Fig. 2 zeigt eine alternative Ausgestaltung des Spülungs- und Entlüftungssystems 8, das in diesem Fall aus einem Spülungsteil 8' als baulicher Einheit analog zur Anordnung aus Fig. 1 sowie aus separat an die Zuleitungen 3, 4 angebundenen Entlüftungsteilen 8" und 8"' besteht. Die Entlüftungsteile 8" und 8"' weisen dabei wiederum Absperrventile 23, 24 auf, denen nun Rückschlagventile 28, 29 nachgeschaltet sind, um ein Eindringen unerwünschter Substanzen in die Zuleitungen 3, 4 zu verhindern.

Um mehrfache Zündungen des Zündsystems zu ermöglichen, mit denen eine wiederholte, zeitlich aufeinanderfolgende Zündung von Brennkammern erzielt werden kann, sind die Ansteuerung der Ventile 10, 12, 13, 14 wie auch die Ventile 10, 12, 13 ,14 selbst so ausgelegt, dass eine wiederholte Freigabe und Absperrung des Flusses der Treibstoffkomponenten möglich ist. Gegebenenfalls können auch die übrigen Einrichtungen des Zündsystems an einen solchen mehrfachen Zündbetrieb angepasst werden, wie beispielsweise der Zünder 5.

## Patentansprüche

1. Zündsystem für Brennkammern von Raketentriebwerken, wobei das Zündsystem versehen ist mit
- einem ersten Treibstoffbehälter (1) für eine erste Treibstoffkomponente und einem zweiten Treibstoffbehälter (2) für eine zweite Treibstoffkomponente, wobei die Treibstoffbehälter (1, 2) des Zündsystems von den Treibstoffbehältern des Raketentriebwerkes getrennt vorgesehen sind,
- einem Zünder (5) und
- jeweils zwischen dem Zünder und einem der Treibstoffbehälter angeordneten separaten Zuleitungen (3, 4) für die jeweilige Treibstoffkomponente,
**dadurch gekennzeichnet,**
**dass** die Treibstoffbehälter (1, 2) jeweils mit einem manuell betätigbaren Absperrventil (9, 11) versehen sind und einen Flansch (17, 18) zur Ankoppelung des jeweiligen Treibstoffbehälters (1, 2) an die jeweilige Zuleitung (3, 4) aufweisen, wodurch die Treibstoffbehälter (1, 2) austauschbar ausgebildet sind.

2. Zündsystem nach Anspruch 1,
wobei die Ansteuerung von Steuer- und Regeleinheiten (10, 12, 13, 14) für den Fluss der Treibstoffkomponenten für mehrfache, zeitlich aufeinander folgende Zündungen ausgelegt ist.

3. Zündsystem nach Anspruch 1 oder 2,
wobei zur Druckregulierung jeweils mindestens eine Blende (6, 7) in den Zuleitungen (3, 4) vorgesehen ist.

4. Zündsystem nach einem der Ansprüche 1 bis 3,
wobei in jeder Zuleitung (3, 4) zwischen dem jeweiligen Treibstoffbehälter (1, 2) und dem Zünder (5) mindestens ein Absperrventil (10, 12) vorgesehen ist.

5. Zündsystem nach einem der Ansprüche 1 bis 4,
wobei jede Zuleitung (3, 4) mit einem Spülungs- und Entlüftungssystem (8) verbunden ist.

6. Zündsystem nach einem der Ansprüche 1 bis 5,
wobei die Zuleitungen (3, 4) mindestens ein Rückschlagventil (13, 14) aufweisen.

7. Zündsystem nach einem der Ansprüche 1 bis 6,
wobei die Zuleitungen (3, 4) mit Einrichtungen (15, 16) zur Bestimmung von Druck und/oder Temperatur in den Zuleitungen (3, 4) verbunden sind.

8. Zündsystem nach einem der Ansprüche 1 bis 7,
wobei der Zünder (5) mit Einrichtungen (19) zur Bestimmung von Druck und/oder Temperatur in dem Zünder (5) verbunden ist.

## Claims

1. Ignition system for combustion chambers of rocket engines, the ignition system being provided with
- a first fuel tank (1) for a first fuel component and a second fuel tank (2) for a second fuel component, the fuel tanks (1, 2) of the ignition system being provided separately from the fuel tanks of the rocket engine,
- an igniter (5) and
- in each case separate supply lines (3, 4), arranged between the igniter and one of the fuel tanks, for the respective fuel component,
**characterized**
**in that** the fuel tanks (1, 2) are provided in each case with a manually actuable shut-off valve (9, 11) and have a flange (17, 18) for coupling the respective fuel tank (1, 2) to the respective supply line (3, 4), with the result that the fuel tanks (1, 2) are designed to be exchangeable.

2. Ignition system according to Claim 1,
the activation of control and regulation units (10, 12, 13, 14) for the flow of the fuel components being designed for multiple ignitions succeeding one another chronologically.

3. Ignition system according to Claim 1 or 2,
in each case at least one diaphragm (6, 7) being provided in the supply lines (3, 4) for the purpose of pressure regulation.

4. Ignition system according to one of Claims 1 to 3, at least one shut-off valve (10, 12) being provided in each supply line (3, 4) between the respective fuel tank (1, 2) and the igniter (5).

5. Ignition system according to one of Claims 1 to 4, each supply line (3, 4) being connected to a scavenging and venting system (8).

6. Ignition system according to one of Claims 1 to 5, the supply lines (3, 4) having at least one non-return valve (13, 14).

7. Ignition system according to one of Claims 1 to 6, the supply lines (3, 4) being connected to devices (15, 16) for the determination of pressure and/or temperature in the supply lines (3, 4).

8. Ignition system according to one of Claims 1 to 7, the igniter (5) being connected to devices (19) for the determination of pressure and/or temperature in the igniter (5).

## Revendications

1. Système d'allumage pour chambres de combustion de moteurs-fusées, le système d'allumage étant pourvu
- d'un premier réservoir de combustible (1) pour un premier composant de combustible et d'un deuxième réservoir de combustible (2) pour un deuxième composant de combustible, les réservoirs de combustible (1, 2) du système d'allumage étant prévus de manière séparée des réservoirs de combustible du moteur-fusée,
- d'un allumeur (5) et
- des conduites d'alimentation (3, 4) séparées disposées à chaque fois entre l'allumeur et l'un des réservoirs de combustible, pour le composant de combustible respectif,
**caractérisé en ce que**
les réservoirs de combustible (1, 2) sont à chaque fois pourvus d'une soupape d'arrêt (9, 11) à commande manuelle et présentent une bride (17, 18) pour le raccordement du réservoir de combustible respectif (1, 2) à la conduite d'alimentation respective (3, 4), de sorte que les réservoirs de combustible (1, 2) sont réalisés de manière interchangeable.

2. Système d'allumage selon la revendication 1,
dans lequel la commande d'unités de commande et de régulation (10, 12, 13, 14) pour le flux des composants de combustible est conçue pour des allumages multiples successifs.

3. Système d'allumage selon la revendication 1 ou 2, dans lequel, pour la régulation de pression, on prévoit au moins à chaque fois un diaphragme (6, 7) dans les conduites d'alimentation (3, 4).

4. Système d'allumage selon l'une quelconque des revendications 1 à 3,
dans lequel, dans chaque conduite d'alimentation (3, 4) est prévue au moins une soupape d'arrêt (10, 12) entre le réservoir de combustible respectif (1, 2) et l'allumeur (5).

5. Système d'allumage selon l'une quelconque des revendications 1 à 4,
dans lequel chaque conduite d'alimentation (3, 4) est connectée à un système de rinçage et de désaérage (8).

6. Système d'allumage selon l'une quelconque des revendications 1 à 5,
dans lequel les conduites d'alimentation (3, 4) présentent au moins un clapet anti-retour (13, 14).

7. Système d'allumage selon l'une quelconque des revendications 1 à 6,
dans lequel les conduites d'alimentation (3, 4) sont connectées à des dispositifs (15, 16) pour déterminer la pression et/ou la température dans les conduites d'alimentation (3, 4).

8. Système d'allumage selon l'une quelconque des revendications 1 à 7,
dans lequel l'allumeur (5) est connecté à des dispositifs (19) pour déterminer la pression et/ou la température dans l'allumeur (5).
